# EUROPÄISCHE PATENTSCHRIFT

(11) **EP 0 437 422 B1**
(45) Veröffentlichungstag und Bekanntmachung des Hinweises auf die Patenterteilung: **18.11.1993**
(21) Anmeldenummer: 88908664.1
(22) Anmeldetag: 30.09.1988
(51) Int. Cl.: H04L 12/56, H04L 12/28

(54) **KOMMUNIKATIONSSYSTEM ZUM BILDEN VON VIRTUELLEN RINGFÖRMIGEN NETZEN IN EINEM ZEITVIELFACH-PAKETVERMITTLUNGSNETZ**
COMMUNICATION SYSTEM FOR FORMING VIRTUAL ANNULAR NETWORKS IN A FAST PACKET SWITCHING NETWORK
SYSTEME DE COMMUNICATION SERVANT A FORMER DES RESEAUX ANNULAIRES VIRTUELS DANS UN RESEAU DE COMMUTATION PAR PAQUETS A MULTIPLEXAGE TEMPOREL

(43) Veröffentlichungstag der Anmeldung: 24.07.1991
(73) Patentinhaber: SIEMENS AKTIENGESELLSCHAFT, 80333 München (DE)
(72) Erfinder: BARWIG, Karlhorst, D-8036 Herrsching (DE); EBERSPÄCHER, Jörg, D-8000 München 60 (DE)
(86) Internationale Anmeldenummer: DE8800606
(87) Internationale Veröffentlichungsnummer: WO9003698

(56) Entgegenhaltungen:
- EP-A- 0 101 377
- EP-A- 0 183 080
- US-A- 4 486 877
- IEE Proceedings Section A à I, vol. 131, part E, no. 2, March 1984 (Old Woking, Surrey, GB); R. Hull et al.: "Virtual resource ring: technique for decentralised resource management in fault-tolerant distributed computer systems", pages 38-44

## Beschreibung

In Breitbandnetzen bzw. Dienste-integrierenden Netzen können Paketvermittlungseinrichtungen eingesetzt werden, in denen die in Paketen verpackten Informationen durch eine asynchrone Zeitvielfach-Übermittlungstechnik vermittelt werden. Die Wirkungsweise und der Aufbau derartiger Paketvermittlungseinrichtungen und deren Einbetten in Breitbandnetze oder Dienste-integrierende Netze sind beispielsweise aus der Druckschrift "Nachrichtentechnische Zeitschrift NTZ", Band 40, Seite 572-577, "Asynchrone Zeitvielfach-Übermittlungstechnik für Breitbandnetze" und aus der Druckschrift "IEEE Journal on selected areas in communications, vol. 4, no. 8 (1986), Seite 1373-1380, "design of an integrated service packet network" sowie aus der US-Patentschrift 4,491,945 bekannt. Grundsätzlich werden in einem derartigen Paketvermittlungsnetz die Daten eines an die Paketvermittlungseinrichtung angeschlossenen Teilnehmerendgerätes in einem Paketierer segmentiert und mit einem Kopffeld versehen. In dem Kopffeld sind zumindest Informationen über die zu benutzenden logischen Kanäle, und den Pakettyp enthalten. Im Teilnehmeranschlußbereich von Paketvermittlungseinrichtungen treten an die Stelle mehrerer physikalischer Verbindungen mehrere logische oder auch virtuelle Verbindungen, die auch als logische Kanäle bezeichnet werden. Sollen mehrere Teilnehmerendgeräte Zugriff auf eine Teilnehmeranschlußleitung erhalten, so geschieht dies durch eine asynchrone Multiplexeinrichtung, die beispielsweise ebenfalls durch ein Vielfachzugriffsverfahren realisiert werden kann.

Die im Teilnehmerendgerät gebildeten Pakete werden über eine zwischen das Teilnehmerendgerät und die Paketvermittlungseinrichtung eingefügte Teilnehmeranschlußeinrichtung zur Paketvermittlungseinrichtung übertragen. Auf der Teilnehmeranschlußleitung eignen sich insbesondere für höhere Übertragungsgeschwindigkeiten alle für die Übermittlung von digitalen Informationen eingesetzten Übertragungsverfahren. In der Paketvermittlungseinrichtung werden die Kopffeldinformationen separiert und von einer in der Paketvermittlungseinrichtung angeordneten zentralen Steuerung bewertet. Handelt es sich bei dem übermittelten Pakettyp um ein Verbindungsaufbaupaket, so wird mit Hilfe der im Nachrichtenfeld dieses Paketes angegebenen Zieladressinformationen und mit Hilfe der zentralen Steuerung eine virtuelle Verbindung zum Zielteilnehmerendgerät aufgebaut. Dies bedeutet, daß über die in der Paketvermittlungseinrichtung angeordneten Koppeleinrichtungen eine logische bzw. virtuelle Verbindung eingerichtet wird. Die virtuelle Verbindung kann über die Paketvermittlungseinrichtung, an die das Ursprungsteilnehmerendgerät angeschlossen ist, hinaus über weitere Paketvermittlungseinrchtungen geführt werden. Hierfür ist zwischen den Paketvermittlungseinrichtungen eine geeignete Verbindungsaufbauprozedur vorzusehen. Die weiteren über eine virtuelle Verbindung zu übermittelnden Pakete werden entsprechend der im Kopffeld angegebenen Informationen in der Paketvermittlungseinrichtung erkannt und über die jeweilige virtuelle Verbindung übermittelt.

Bei der für die Paketvermittlungseinrichtung vorgesehenen "asynchronen Zeitvielfach-Übermittlungstechnik - in der Fachwelt auch als "Fast Packet Switching", "Asynchronous Transfer Mode, ATM" und "Asynchronous Time Division Technique, ATD" bekannt - handelt es sich um ein paketorientiertes Vermittlungsverfahren, bei dem die aus der CCITT-Empfehlung X.25 bekannten Fehlerbehebungsprozeduren und die Flußkontrolle nicht vorgesehen sind. Ein Fehlerbehebungsverfahren für die Kopffeldinformationen erscheint jedoch sinnvoll. Weitere Fehlerbehandlungsprozeduren sowie die Flußkontrolle bleiben den Ende-zu-Ende-Protokollen, die zwischen den Teilnehmerendgeräten ablaufen, überlassen.

Des weiteren ist es bekannt, Breitbandnetze durch ringförmige Netze zu realisieren. Hierbei werden in zunehmendem Maße - insbesondere bei hohen Übertragungsgeschwindigkeiten - standardisierte Zugriffsverfahren eingesetzt. Ein derartiges Ringzugriffsverfahren stellt beispielsweise das standardisierte Token-Zugriffsverfahren gemäß ANSI X3, T9.5, "Fiber distributed data interface (FDDI)", Token ring access control (MAC), dar. Dieses Verfahren setzt ein ringförmiges Netz voraus, das aus seriell geschalteten Teilnehmerendgeräten besteht. Die Informationen werden im Paketmodus seriell über das ringförmige Netz übermittelt. Jedes der Teilnehmerendgeräte ist mit einer Empfangs- und Sendeeinrichtung ausgestattet. Dazwischen ist eine Ringzugriffseinrichtung eingefügt, in der die vorhergehend erläuterten Ringzugriffsprozeduren realisiert sind. Mit Hilfe der Ringzugriffsprozedur greift ein Teilnehmerendgerät auf das ringförmige Netz zu.

Mit der Erfindung wird das Ziel erreicht, die beiden Systeme in sich ergänzender und unterstützender Weise zusammenzuführen.

Mit der durch die Merkmale des Anspruchs 1 bestimmten Erfindung wird im wesentlichen das Bilden von virtuellen ringförmigen Netzen innerhalb eines Paketvermittlungsnetzes erreicht. Hierbei werden mit der Paketvermittlungseinrichtung vermittlungsseitig und mit den in den Teilnehmerendgeräten angeordneten Ringnetzzugriffseinrichtungen teilnehmerseitig die hierfür vorgesehenen logischen Kanäle der Teilnehmeranschlußleitungen zu einem virtuellen ringförmigen Netz zusammengeschaltet. Die einzige Voraussetzung hierfür besteht darin, daß die auf den Anschlußleitungen definierten logischen Kanäle nicht wie bei den üblichen Punkt-zu-Punkt-Verbindungen paarweise, sondern einzeln in der Koppelnetzeinrichtung koppelbar sind. Der Zugriff und die Überwachung des ringförmigen Netzes wird durch in den Ringnetzzugriffseinrichtungen implementierte Ringnetzzugriffsprozeduren durchgeführt.

Ein wesentlicher Vorteil der Erfindung ist darin zusehen, daß diejenigen Teilnehmerendgeräte, die häufig miteinander kommunizieren - d. h. die zentrale Steuerung der Paketvermittlungseinrichtung durch den häufigen Verbindungsaufbau dynamisch stark belasten - zu virtuellen ringförmigen Netzen zusammenschaltbar sind, wodurch der Verbindungsaufbau für ein virtuelles ringförmiges Netz einmalig durchzuführen ist und der weitere Kommunikationsaustausch - einschließlich der Verbindungsaufbauten - zwischen den Teilnehmerendgeräten alleine - d.h. ohne Einbeziehen der zentralen Steuerung - mit Hilfe der Ringnetzzugriffsprozeduren der Ringnetzzugriffseinrichtungen erfolgt. Dies bedeutet eine wesentliche Reduzierung der dynamischen Belastung der zentralen Steuerung einer Paketvermittlungseinrichtung.

Ein weiterer wesentlicher Vorteil der Erfindung ist darin zu sehen, daß die an ein virtuelles ringförmiges Netz angeschlossenen Teilnehmerendgeräte weiterhin über die noch freien logischen Kanäle der Teilnehmeranschlüsse im Paketvermittlungsmodus über die Paketvermittlungseinrichtungen miteinander kommunizieren können. Wird ein Teilnehmerendgerät durch mehrere Teilnehmereinrichtungen gebildet, so können unter Steuerung einer im Teilnehmerendgerät vorgesehenen peripheren Steuerung beispielsweise die Teilnehmereinrichtungen jeweils gleichzeitig oder wechselzeitig über beide Netze - ringförmiges Netz und Paketvermittlungsnetz - kommunizieren.

Ein weiterer Vorteil der Erfindung ist in der prozeduralen Unabhängigkeit des virtuellen ringförmigen Netzes von den Paketvermittlungsprozeduren zu sehen. Dies wird dadurch erreicht, daß das virtuelle ringförmige Netz nach dem Verbindungsaufbau durch die Paketvermittlungseinrichtung durch die in den Ringnetzzugriffssteuerungen implementierten Ringnetzzugriffsprozeduren in Betrieb genommen, überwacht und im Störungsfalle entsprechende Beseitigungsmaßnahmen eingeleitet werden.

Gemäß einer vorteilhaften Weiterbildung der Erfindung - Anspruch 2 - wird ein virtuelles ringförmiges Netz für Teilnehmerendgeräte gebildet, die an mehrere Paketvermittlungseinrichtungen angeschlossen sind, wobei die Anforderungsinformationen im Rahmen der vorhandenen Aufbauprozeduren an die weiteren Paketvermittlungseinrichtungen vermittelt werden. Auf diese Weise können bei geringstem zusätzlichen Aufwand - meist durch Programme realisierte zusätzliche Prozeduren - virtuelle ringförmige Netze mit Teilendgeräten gebildet werden, die an verschiedenen Paketvermittlungseinrichtungen angeschlossen sind.

Nach einer weiteren vorteilhaften Weiterbildung der Erfindung können innerhalb einer Paketvermittlungseinrichtung mehrere virtuelle ringförmige Netze gebildet werden. An derart gebildete ringförmige Netze sind beispielsweise jeweils gleiche Teilnehmerendgerätetypen oder Teilnehmerendgeräte mit jeweils gleich hohen bzw. niedrigen Übermittlungsgeschwindigkeiten anschließbar. Für weitere, nach unterschiedlichsten Kriterien ausgewählte Gruppen von Teilnehmerendgeräten können jeweils eigene unabhängig voneinander betriebene virtuelle ringförmige Netze gebildet werden.

Analog hierzu kann ein Teilnehmerendgerät an mehrere virtuelle ringförmige Netze angeschlossen werden. Jedes dieser virtuellen ringförmigen Netze wird aufgrund einer Anforderungsinformation mit Hilfe der Paketvermittlungseinrichtung und der Teilnehmerendgeräte aufgebaut. Für die Inbetriebnahme, den Betrieb und die Überwachung der jeweiligen virtuellen ringförmigen Netze ist im Teilnehmerendgerät jeweils eine die Ringnetzzugriffsprozedur realisierende Ringnetzzugriffssteuerung vorgesehen. Diese Ringnetzzugriffssteuerungen werden jeweils wiederum von einer im Teilnehmerendgerät angeordneten peripheren Steuerung - meist in Prozessortechnik realisiert - koordiniert.

Das Hinzufügen bzw. Entfernen von Teilnehmerendgeräten zu bzw. von virtuellen ringförmigen Netzen kann besonders vorteilhaft mit Hilfe der Paketvermittlungseinrichtung durchgeführt werden - siehe Anspruch 5. Hierbei ist in eine Anforderungsinformation eine Änderungsinformation einzufügen, durch welche die Einzufügenden bzw. zu Entfernenden Teilnehmerendgeräte bestimmt sind. Die Änderungsinformationen können ebenso derart gebildet werden, daß die noch im virtuellen ringförmigen Netz zu verbleibenden Teilnehmerendgeräte angegeben werden. Durch das Rekonfigurieren des virtuellen ringförmigen Netzes wird dieses gestört, so daß es zu einem Protokoll-Recovery kommt, mit dessen Hilfe das virtuelle ringförmige Netz automatisch in Betrieb genommen wird. Gesteuert und überwacht werden - wie bereits erläutert - die virtuellen ringförmigen Netze jeweils von einer Ringnetzzugriffssteuerung. Dies bedeutet, daß für jedes virtuelle ringförmige Netz eine separate Ringnetzzugriffsteuerung im Teilnehmerendgerät vorzusehen ist. Die Koordination hinsichtlich Informationsfluß von und zu den Ringzugriffseinrichtungen innerhalb eines Teilnehmerendgerätes übernimmt eine meist in Prozessortechnik realisierte periphere Steuerung.

Dieses sehr vorteilhafte Rekonfigurieren von virtuellen ringförmigen Netzen kann ebenso bei Unterbrechungen bzw. Störungen von virtuellen ringförmigen Netzen angewandt werden - siehe Anspruch 6. Hierbei wird nach dem Erkennen und Lokalisieren einer Ringnetzunterbrechung oder Ringnetzstörung mit Hilfe der Ringnetzzugriffsprozedur eine Anforderungsinformation gebildet, in der die gestörten Teilnehmerendgeräte bzw. Ringnetzteile angegeben sind. Diese Anforderungsinformation wird an die zentrale Steuerung der jeweiligen Paketvermittlungseinrichtung übermittelt und dort bewertet. Mit Hilfe der zentralen Steuerung und der Koppelfeldeinrichtung (Koppelnetz) der betreffenden Paketvermittlungseinrichtung wird das virtuelle ringförmige Netz derart rekonfiguriert, daß der gestörte Teil des virtuellen ringförmigen Netzes entfernt und die verbleibenden intakten Teile ein vollständiges virtuelles ringförmiges Netz bilden. Analog hierzu kann nach einer Reparatur der detekten Ringnetzkomponenten bzw. Teilnehmerendgeräte das derart gebildete virtuelle ringförmige Netz in die ursprüngliche Konfiguration zurückgeführt werden.

Die Anforderungsinformationen können prinzipiell sowohl durch die Eingabeeinrichtung der Paketvermittlungseinrichtung oder im Teilnehmerendgerät gebildet werden - siehe Anspruch 7 und 8. Wo diese Anforderungsinformationen vorteilhafter zu bilden sind, hängt im wesentlichen von administrativen Beschränkungen und den betriebstechnischen Eingabemöglichkeiten in einem Paketvermittlungsnetz ab. So ist das Bilden von virtuellen ringförmigen Netzen beispielsweise nur durch eine Administration (im öffentlichen Netzen beispielsweise durch eine Postverwaltung, in privaten Netzen durch die Netzverwaltung des Betreibers) erlaubt. Andererseits sind betriebstechnische Eingaben für die zentrale Steuerung einer Paketvermittlungseinrichtung von den Teilnehmerendgeräten nicht in allen Paketvermittlungsnetzen vorgesehen. Desweiteren bringt das Bilden der Anforderungsinformationen im Teilnehmerendgerät die Gefahr mit sich, daß durch häufiges und fehlerhaftes Übermitteln von Anforderungsinformationen an die zentrale Steuerung der Paketvermittlungseinrichtung diese überlastet oder wesentlich gestört wird. Das Bilden von Anforderungsinformationen bzw. das Konfigurieren von virtuellen ringförmigen Netzen durch eine betriebstechnische Eingabe an der Paketvermittlungseinrichtung, die vom Teilnehmer beantragt ist, wird unter Berücksichtigung der vorhergehenden Erläuterungen die geläufigste Methode zum Bilden von Anforderungsinformationen darstellen.

Im folgenden wird ein Ausführungsbeispiel der Erfindung anhand zweier Zeichnungen erläutert. Dabei zeigen
- FIG 1: anhand eines Blockschaltbildes ein in einem Paketvermittlungsnetz gebildetes virtuelles ringförmiges Netz und
- FIG 2: in einem Blockschaltbild die in einer Teilnehmerendeinrichtung zum Bilden von virtuellen ringförmigen Netzen erforderlichen Komponenten.

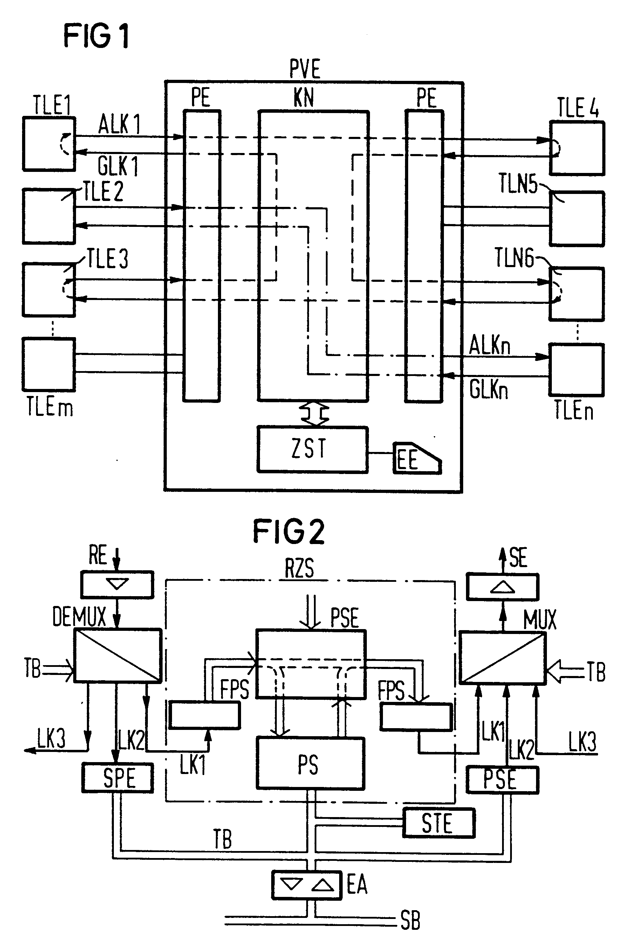

FIG 1 zeigt das Blockschaltbild einer Paketvermittlungseinrichtung PVE einschließlich der an sie angeschlossenen Teilnehmergeräte TLE1..n. Die Paketvermittlungseinrichtung PVE ist im wesentlichen aus peripheren Verarbeitungseinrichtungen PE, aus einem Paket-Koppelnetz KN und einer zentralen Steuerung ZST gebildet. Die Funktionen und technischen Realisierungen der einzelnen Komponenten der Paketvermittlungseinrichtung PVE entsprechen beispielsweise denen der US-Patentschrift 4,491,945, "fast packet switch". Die einzelnen Teilnehmerendgeräte TLE sind jeweils über einen physikalischen Empfangs- bzw. Sendekanal mit einer peripheren Vorverarbeitungseinrichtung PE verbunden. Die Teilnehmerendgeräte TLE können über diese physikalischen Kanäle über mehrere logische bzw. virtuelle Kanäle bzw. Verbindungen mit der Paketvermittlungseinrichtung PVE kommunizieren. Aus diesem Grund ist in jedem der zu übermittelnden Pakete in einem dem jeweiligen Paket vorangestellten Kopffeld eine Information anzugeben, mit der ein logischer Kanal dem aktuell zu übermittelnden Paket zugeordnet wird. Neben dieser Information über die benutzten logischen Kanäle wird im Teilnehmerendgerät TLE in das Kopffeld zumindest noch eine Information über den Typ des Paketes eingetragen. Weitere Eintragungen in das Kopffeld, wie z. B. eine Zeitangabe über die Abgabe des Paketes an die jeweilige Paketvermittlungseinrichtung PVE, sind möglich. Grundsätzlich sind zwei Pakettypen zu unterscheiden, nämlich Verbindungsaufbaupakete und Nachrichtenpakete. Mit Hilfe der Verbindungsaufbaupakete, in deren Nachrichtenfeld die Ursprungs- und Zieladresse eingetragen ist, wird eine Verbindung - in Paketvermittlungsnetzen eine virtuelle Verbindung - zwischen dem Ursprungs- und dem Zielteilnehmerendgerät aufgebaut. Nachfolgend übermittelte Nachrichtenpakete werden entsprechend der in der Paketvermittlungseinrichtung PVE eingerichteten virtuellen Verbindung zum Zielteilnehmerendgerät übermittelt. Das Einrichten und Vermitteln der virtuellen Verbindungen erfolgt mit Hilfe der zentralen Steuerung und der Koppelnetzeinrichtung KN.

Für das Ausführungsbeispiel sei angenommen, daß mit dem ersten, dritten, vierten und sechsten Teilnehmerendgerät TLN 1, 3, 4, 6 ein virtuelles ringförmiges Netz eingerichtet werden soll. Desweiteren ist die Übermittlungskapazität in dem zu bildenden virtuellen ringförmigen Netz anzugeben. Dies kann beispielsweise durch eine im Verbindungsaufbaupaket vorgesehene Angabe der gewünschten maximalen Übermittlungsgeschwindigkeit (Bitrate) bewirkt werden. Diese Informationen werden beispielsweise an einer Eingabeeinrichtung EE der Paketvermittlungseinichtung PVE eingegeben. In dieser Eingabeeinrichtung EE wird eine die eingegebenen Informationen beinhaltende Anforderungsinformation gebildet und an die zentrale Steuerung ZST übermittelt. Durch Auswerten der Anforderungsinformation in der zentralen Steuerung ZST werden die von den Teilnehmerendgeräten zu verwendenden logischen Kanäle festgelegt und entsprechende Kanalnummern in das jeweilige Kopffeld eingetragen. Mit Hilfe des Koppelnetzeinrichtung KN werden die jeweils an der Paketvermittlungseinrichtung ankommenden logischen Kanäle ALK 1, 3, 4, 6 derart mit den von der Paketvermittlungseinrichtung PVE gehenden logischen Kanäle GLK 1, 3, 4, 6 virtuell verbunden, daß ein virtuelles ringförmiges Netz gebildet wird - siehe gestrichelte Linie. Gleichzeitig werden in den betreffenden Teilnehmerendgeräten TLE 1, 3, 4, 6 nach Empfang eines von der zentralen Steuerung ZST übermittelten Verbindungsaufbaupakets die jeweils gehenden logischen Kanäle GLK über eine Ringnetzzugriffseinrichtung mit den jeweiligen ankommenden logischen Kanälen ALK virtuell verbunden. Der Aufbau und die Wirkungsweise dieser Komponenten der Teilnehmerendgeräte TLE ist in FIG 2 näher erläutert. Die Inbetriebnahme des derart gebildeten virtuellen ringförmigen Netzes erfolgt durch eine in der Ringnetzzugriffssteuerung implementierte Ringnetzzugriffsprozedur. Diese Ringnetzzugriffsprozedur kann beispielsweise durch das standardisierte Token-Zugriffsverfahren gemäß ANSI X3.T9.5, "Fiber distributed data interface (FDDI)", Token access control (MAC), realisiert sein. Mit Hilfe dieses Ringnetzzugriffsverfahrens kann das gebildete virtuelle ringförmige Netz in Betrieb genommen, überwacht und betrieben werden. Der Zugriff der einzelnen Teilnehmerendgeräte TLE auf das virtuelle ringförmige Netz wird durch das vorhergehend angegebene Token-Zugriffsverfahren durchgeführt. Hierbei erhält dasjenige Teilnehmerendgerät TLE Zugriff auf das virtuelle ringförmige Netz, das den vom zuletzt zugreifenden Teilnehmerendgerät TLE gebildete sogenannten "freien Token" erkennt und belegt. Die Informationen werden in diesem virtuellen ringförmigen Netz beispielsweise wiederum im Paketmodus seriell übermittelt.

Beispielhaft ist eine virtuelle Verbindung zwischen dem zweiten Teilnehmerendgerät TLE2 und dem n-ten Teilnehmerendgerät NTLN durch eine strichpunktierte Linie dargestellt. Hierdurch wird auch gezeigt, daß in einer Paketvermittlungseinrichtung PVE gleichzeitig oder wechselzeitig sowohl virtuelle End-to-End-Verbindungen zwischen Teilnehmerendgeräten - dies stellt die übliche in Paketvermittlungsnetzen verwendete Verbindungsart dar - als auch virtuelle ringförmige Netze gebildet werden können. Wie bereits erläutert, sind hierfür lediglich zusätzliche Informationen in den bereits vorwendeten Verbindungsaufbaupaketen und ein zusätzliches Steuerungsverfahren zum Einrichten der virtuellen Verbindungen in der zentralen Steuerung ZST der Paketvermittlungseinrichtung PVE erforderlich.

FIG 2 zeigt ein Blockschaltbild die für ein Bilden eines virtuellen ringförmigen Netzes erforderlichen Komponenten in einem Teilnehmerendgerät TLE. Für das Ausführungsbeispiel sei angenommen, daß drei virtuelle bzw. logische Kanäle in einem Teilnehmerendgerät TLE bearbeitet werden können. Der dritte virtuelle bzw. logische Kanal LK3 sei ein hier nicht näher beschriebener Kanal - beispielsweise für eine Sprachverbindung -, der zu einer weiteren, nicht dargestellten Teilnehmereinrichtung eines Teilnehmerendgerätes TLE geführt wird. Desweiteren sei der zweite logische Kanal LK2 für die Signalisierung mit dem Netz reserviert. Über diesen zweiten logischen Kanal LK2 werden die Verbindungsaufbaupakete von der zugehörigen Paketvermittlungseinrichtung PVE empfangen oder an diese übermittelt. Über diesen zweiten logischen Kanal LK2 gelangen somit die Verbindungsaufbaupakete, die dem Teilnehmerendgerät TLE anzeigen, daß ein virtuelles ringförmiges Netz gebildet werden soll. Zum Bilden eines derartigen virtuellen ringförmigen Netzes ist beispielsweise der erste logische Kanal LK1 vorgesehen. Die logischen Kanäle LK1... LK3 werden in einer Multiplexeinrichtung MUX zusammengefaßt und über eine Sendeeinrichtung SE an die Paketvermittlungseinrichtung PVE übermittelt. Analog hierzu werden die von der Paketvermittlungseinrichtung PVE zusammengefaßten logischen Kanäle LK1... LK3 über eine in dem Teilnehmerendgerät TLE angeordneten Empfangseinrichtung RE an eine Demultiplexeinrichtung DEMUX über mittelt. In dieser werden die logischen Kanäle LK1...LK3 separiert und getrennt an die betreffenden Einrichtungen des Teilnehmerendgerätes TLE weitergeführt. Das Multiplex - bzw. Demultiplexverfahren kann vermittlungsseitig bwz. teilnehmerendgeräteseitig beispielsweise ebenfalls durch ein asynchrones Vielfachzugriffsverfahren realisiert sein.

Für das Ausführungsbeispiel sei angenommen, daß im zweiten logischen Kanal LK2 eine Anforderungsinformation von der Paketvermittlungseinrichtung PVE an das Teilnehmerendgerät TLE übermittelt wird, in der das Bilden eines virtuellen ringförmigen Netzes durch den jeweils ersten logischen Kanal LK1 bestimmt ist. Die Anforderungsinformation wird über eine Serien-Parallel-Umsetzeinrichtung SPE an einen teilnehmerendgeräteinternen Bus TB zu einer peripheren Steuereinrichtung STE - durch Mikroprozessor realisiert - geleitet. Mit Hilfe dieser periperen Steuerung STE werden die Multiplex - und die Demultiplexeinrichtung MUX, DEMUX über den teilnehmerendgeräteinternen Bus (TB) entsprechend gesteuert bzw. eingestellt, d. h. die logischen Kanäle LK - insbesondere der erste logische Kanal LK1 - werden mit individuellen logischen Kanalnummern versehen. Zwischen dem ankommenden und dem abgehenden ersten logischen Kanal LK1 ist eine Ringnetzzugriffssteuerung RZS eingefügt. Sowohl der ankommende als auch der abgehende erste logische Kanal LK1 ist jeweils über einen Pufferspeicher - als FIFO-Buffer realisiert - von den nachfolgenden Verarbeitungseinheiten entkoppelt. Zwischen die beiden Pufferspeicher FPS ist eine Protokollsteuereinrichtung PSE eingefügt. Wie bei jedem ringförmigen Netz - insbesondere bei einem Netz mit "Token-Protokoll" - ist die Protokollsteuereinrichtung PSE im Datenstrom angeordnet. Durch diese Protokollsteuereinrichtung PSE werden die beiden ersten logischen Kanäle LK1 durchverbunden, d.h. die erforderliche Teilnehmerschleife für das Bilden eines virtuellen ringförmigen Netzes geschlossen. Als Protokollsteuereinrichtung PSE kann grundsätzlich jede für ringförmige Netze geeignete Zugriffssteuereinrichtung - MAC (medium access control)-Steuerung - verwendet werden. Dies ist z. B. eine aus den integrierten Schaltkreise AM 79C83, AM 79C82 und AM 79C81 der Firma "Advanced Micro Device" gebildete Steuerung zum Aufbau eines Tokenringnetzes nach ANSI X3,T9.5. An diese Protokollsteuereinrichtung PSE ist desweiteren ein Pufferspeicher PS angeschlossen. In diesem Pufferspeicher PS werden die über das virtuelle ringförmige Netz übermittelten Sende bzw. Empfangspakete im Sinne einer Weitergabe an das ringförmige Netz oder an eine weiterverarbeitende Einrichtung im Teilnehmerendgerät TLE zwischengespeichert. In diesem Pufferspeicher PS werden immer vollständige Pakete unterschiedlicher Länge zwischengespeichert. Der Informationsaustausch mit den weiterverarbeitenden Einrichtungen in einem Teilnehmerendgerät TLE erfolgt über eine Ein-/Ausgabeeinrichtung EA über einen Systembus SB in an sich bekannter Weise.

Sollten mehrere virtuelle Ringe gleichzeitig in einem Teilnehmerendgerät TLE realisiert sein, so müssen folgende Einrichtungen mehrfach vorhanden sein:
- Multiplex und Demultiplexeinrichtung MUX, DEMUX
- die Pufferspeicher FPS, PS und
- die Protokollsteuereinrichtung PSE.

## Patentansprüche

1. Kommunikationssystem zum Bilden von virtuellen ringförmigen Netzen in einem Zeitvielfach-Paketvermittlungsnetz,
- derart ausgestaltet, daß digitale Informationen in an eine gemäß der asynchronen Zeitvielfachübermittlungstechnik vermittelnde Paketvermittlungseinrichtung (PVE) angeschlossenen Teilnehmerendgeräten (TLE) paketiert und jeweils mit einem zusätzlichen, jedem Paket vorgesetzten Kopffeld versehen werden, in das zumindest jeweils eine Information über die jeweils benutzten logischen Teilnehmeranschlußkanäle und eine den Pakettyp bestimmende Information eingefügt ist,
- und derart ausgestaltet ist, daß derart gebildete Pakete über eine Teilnehmeranschlußleitung mit Hilfe einer Übertragungstechnik an die zugeordnete programmgesteuerte Paketvermittlungseinrichtung (PVE) übermittelt werden, in der die im Kopffeld angegebenenen Informationen und bei Verbindungsaufbaupaketen die im Nachrichtenfeld übermittelten Adreßinformationen separiert und von einer zentralen Steuerung (ZST) bewertet werden, mit deren Hilfe anhand der jeweils vorliegenden Informationen zumindest eine logische bzw. virtuelle Verbindung vom Ursprungs zum Zielteilnehmerendgerät (TLE) aufgebaut wird, über die anschließend die der jeweiligen virtuellen Verbindung zugehörigen Pakete über eine in der PaketVermittlungeinrichtung (PVE) angeordnete Koppeleinrichtung (KN) und gegebenenfalls über weitere Paketvermittlungseinrichtungen (PVE) vermittelt werden,
- wobei die Pakete zumindest über einen zugeordneten logischen Kanal des betreffenden Teilnehmeranschlußes zum Zielteilnehmerendgerät (TLE) geführt und dort depaketiert werden,
- und derart ausgestaltet, daß nach Vorliegen einer Anforderungsinformation zum Bilden zumindest eines virtuellen ringförmigen Netzes in der zentralen Steuerung (ZST) mit dieser und mit Hilfe der Koppeleinrichtung (KN) und gegebenenfalls weiterer Paketvermittlungseinrichtungen (PVE) jeweils zumindest ein ankommender logischer Kanal (ALK) von durch die Anforderungsinformationen bestimmten Teilnehmerendgeräteanschlussen derart mit zumindest jeweils einem abgehenden logischen, durch die Anforderungsinformationen bestimmten Kanal (GLK) eines Teilnehmerendgeräteanschlusses gekoppelt wird, daß die in den Anforderungsinformationen angegebenen Teilnenmerendgeräte (TLE) jeweils zumindest ein virtuelles ringförmiges Netz bilden,
- wobei in den betroffenen Teilnehmerendgeräten (TLE) nach Vorliegen der Anforderungsinformationen jeweils die betroffenen logischen Konäle des Teilnehmerendgeräteanschlusses mit Hilfe von Paketmultiplex- und Demultiplexeinrichtungen (MUX, DEMUX) separiert bzw. zusammengefügt werden und die für das Bilden zumindest eines virtuellen ringförmigen Netzes vorgesehenen logischen abgehenden und ankommenden Kanäle (ALK, GLK) jeweils über eine von einer peripheren Steuerung (STE) des Teilnehmerendgerätes (TLE) gesteuerten Ringnetzzugriffssteuerung (RZS) im Sinne einer Ringnetzbildung gekoppelt werden,
- und derart ausgestaltet, daß die Inbetriebnahme des jeweiligen virtuellen ringförmigen Netzes und der Zugriff auf das jeweilige virtuelle ringförmige Netz sowie die Kommunikation zwischen den jeweils ein virtuelles ringförmiges Netz bildend Teilnehmerendeinrichtungen (TLE) mit Hilfe von jeweils in der Ringnetzzugriffssteuerung (RZS) implementierten und von den Prozeduren der Paketvermittlungseinrichtung (PVE) unabhängigen Ringnetzzugriffsprozeduren erfolgt.

2. Kommunikationssystem nach Anspruch 1,
**dadurch gekennzeichnet,**
daß das Kommunikationssystem derart ausgestaltet ist, daß ein virtuelles ringförmiges Netz für Teilnehmerendgeräte (TLE) gebildet wird, die an mehreren Paketvermittlungseinrichtung (PVE) angeschlossen sind, wobei die Anforderungsinformationen im Rahmen der vorhandenen Verbindungsaufbauprozeduren an die weiteren Paketvermittlungseinrichtungen (PVE) übermittelt werden.

3. Kommunikationssystem nach einem der vorhergehenden Ansprüche,
**dadurch gekennzeichnet,**
daß das Kommunikationssystem derart ausgestaltet ist, daß mehrere sich über zumindest eine Paketvermittlungseinrichtung (PVE) erstreckende virtuelle ringförmige Netze nach dem jeweiligen Vorliegen einer Anforderungsinformation gebildet werden.

4. Kommunikationssystem nach einem der vorhergehenden Ansprüche,
**dadurch gekennzeichnet,**
daß das Kommunikationssystem derart ausgestaltet ist, daß ein Teilnehmerendgerät (TLE) jeweils durch unterschiedliche logische Kanäle des Teilnehmeranschlusses an mehrere virtuelle ringförmige Netze ankoppelbar ist und daß für jedes virtuelle ringförmige Netz eine mit einer Ringnetzzugriffsprozedur versehene und von einer peripheren Steuerung (STE) des Teilnehmerendgerätes (TLE) gesteuerte Ringnetzzugriffssteuerung (RZS) vorgesehen ist.

5. Kommunikationssystem nach einem der vorhergehenden Ansprüche,
**dadurch gekennzeichnet,**
daß das Kommunikationssystem derart ausgestaltet ist, daß das Hinzufügen bzw. Entfernen von Teilnehmerendgeräten zu bzw. von virtuellen ringförmigen Netzen nach Vorliegen einer Änderungsinformationen enthaltenden Anforderungsinformation durch entsprechendes Koppeln der relevanten logischen Kanäle in der jeweiligen Paketvermittlungseinrichtung (PVE) vorgenommen wird und daß das logische Aufnehmen bzw. Entfernen des Teilnehmerendgerätes (TLE) automatisch während der Inbetriebnahme des geänderten virtuellen ringförmigen Netzes durch die Ringnetzzugriffsprozedur erfolgt.

6. Kommunikationssystem nach einem der vorhergehenden Ansprüche,
**dadurch gekennzeichnet,**
daß das Kommunikationssystem derart ausgestaltet ist, daß nach einem Erkennen von Unterbrechungen bzw. Störungen von virtuellen ringförmigen Netzen durch die jeweiligen Ringnetzzugriffsprozeduren von diesen jeweils eine eine Änderungsinformation enthaltende Anforderungsinformation gebildet und an die zentrale Steuerung (ZST) der betreffenden Paketvermittlungseinrichtung (PVE) übermittelt wird, die derart strukturiert ist, daß mit dessen Koppeleinrichtung (KN) das jeweilige virtuelle ringförmige Netz derart rekonfiguriert wird, daß der unterbrochene bzw. gestörte Teil des virtuellen ringförmigen Netzes entfernt und die verbleibenden intakten Teile ein virtuelles ringförmiges Netz bilden.

7. Kommunikationssystem nach einem der vorhergehenden Ansprüche,
**dadurch gekennzeichnet,**
daß das Kommunikationssystem derart ausgestaltet ist, daß die Anforderungsinformation mit einer Eingabeeinrichtung (EE) der Paketvermittlungseinrichtung (PVE) gebildet und an die zentrale Steuerung (ZST) und an die betroffenen Teilnehmerendgeräte (TLE) übermittelt wird.

8. Kommunikationssystem nach einem der vorhergehenden Ansprüche,
**dadurch gekennzeichnet,**
daß das Kommunikationssystem derart ausgestaltet ist, daß die Anforderungsinformation in den Teilnehmerendgeräten (TLE) gebildet und an die zentrale Steuerung (ZST) der zugehörigen Paketvermittlungseinrichtung (PVE) und von dieser an die betroffenen Teilnehmerendgeräte (TLE) übermittelt wird.

## Claims

1. Communication system for forming virtual ring networks in a time-division multiplex packet switching network,
- designed in such a way that digital information can be packeted in subscriber terminals (TLE) connected to a packet switching device (PVE) switching in accordance with the asynchronous time-division multiplex transmission technique and are provided in each case with an additional header field placed in front of each packet, into which at least one information item about the respective logical subscriber line channels and one information item defining the packet type is inserted in each case,
- and is designed in such a way that packets formed in this manner are transmitted via a subscriber line to the associated program-controlled packet switching device (PVE) with the aid of a transmission technique in which the information specified in the header field and, in the case of connection establishing packets, the address information transmitted in the message field are separated and evaluated by a central controller (ZST), with the aid of which at least one logical or virtual connection is established from the source terminal to the destination terminal (TLE) on the basis of the information present in each case, via which the packets associated with the respective virtual connection are subsequently switched via a coupling device (KN) arranged in the packet switching device (PVE), and if necessary via further packet switching devices (PVE),
- in which the packets are carried at least via one associated logical channel of the respective subscriber line to the destination subscriber terminal (TLE) and are depacketed there,
- and designed in such a way that, following the presence of a request information item for forming at least one virtual ring network in the central controller (ZST), with the latter, and with the aid of the coupling device (KN), and if appropriate further packet switching devices (PVE), in each case at least one incoming logical channel (ALK) is coupled by subscriber terminal lines defined by the request information to at least one outgoing logical channel (GLK) of a subscriber terminal line defined by the request information in each case in such a way that the subscriber terminals (TLE) indicated in the request information form at least one virtual ring network in each case,
- in which the affected logical channels of the subscriber terminal line are separated or combined in each case with the aid of packet multiplex and demultiplex devices (MUX, DEMUX) in the respective subscriber terminals (TLE) following the presence of the request information, and the logical outgoing and incoming channels (ALK, GLK) provided for forming at least one virtual ring network are coupled in each case in the manner of a ring network formation via a ring network access controller (RZS) controlled by a peripheral controller (STE) of the subscriber terminal (TLE),
- and designed in such a way that the commencement of operation of the respective virtual ring network and the access to the respective virtual ring network as well as the communication between the subscriber terminals (TLE) forming a virtual ring network in each case is performed with the aid of ring network access procedures implemented in the ring network access controller (RZS) in each case and independent of the procedures of the packet switching device (PVE).

2. Communication system according to Claim 1, characterised in that the communication system is designed in such a way that a virtual ring network is formed for subscriber terminals (TLE) which are connected to a plurality of packet switching devices (PVE), in which the request information is transmitted to the further packet switching devices (PVE) within the framework of the existing connection establishment procedures.

3. Communication system according to one of the preceding claims, characterised in that the communication system is designed in such a way that a plurality of virtual ring networks extending over at least one packet switching device (PVE) are formed in accordance with the respective presence of a request information item.

4. Communication system according to one of the preceding claims, characterised in that the communication system is designed in such a way that a subscriber terminal (TLE) can be coupled in each case by different logical channels of the subscriber line to a plurality of virtual ring networks, and in that a ring network access controller (RZS) which is provided with a ring network access procedure and is controlled by a peripheral controller (STE) of the subscriber terminal (TLE) is provided for each virtual ring network.

5. Communication system according to one of the preceding claims, characterised in that the communication system is designed in such a way that the addition or removal of subscriber terminals to or from virtual ring networks respectively is performed following the presence of a request information item containing amendment information by corresponding coupling of the relevant logical channels in the respective packet switching device (PVE), and in that the logical insertion or removal of the subscriber terminal (TLE) is performed automatically during the commencement of operation of the modified virtual ring network by the ring network access procedure.

6. Communication system according to one of the preceding claims, characterised in that the communication system is designed in such a way that, after interruptions or faults of virtual ring networks have been detected by the respective ring network access procedures, a request information item containing an amendment information item is formed by the latter in each case and is transmitted to the central controller (ZST) of the respective packet switching device (PVE), which is constructed in such a way that the respective virtual ring network is reconfigured with the coupling device (KN) thereof in such a way that the interrupted or faulty part of the virtual ring network is removed and the remaining intact parts form a virtual ring network.

7. Communication system according to one of the preceding claims, characterised in that the communication system is designed in such a way that the request information item is formed with an input device (EE) of the packet switching device (PVE) and is transmitted to the central controller (ZST) and to the respective subscriber terminals (TLE).

8. Communication system according to one of the preceding claims, characterised in that the communication system is designed in such a way that the request information item is formed in the subscriber terminals (TLE) and is transmitted to the central controller (ZST) of the associated packet switching device (PVE), and from the latter to the respective subscriber terminals (TLE).

## Revendications

1. Système de communication destiné à former des réseaux annulaires virtuels dans un réseau de commutation par paquets à multiplexage temporel,
- agencé de telle sorte que des informations numériques sont mises sous la forme de paquets dans des terminaux d'abonnés (TLE) reliés à un dispositif de commutation par paquets (PVE), réalisant une commutation conformément à la technique de transmission asynchrone à multiplexage temporel, et sont munies chacune d'un en-tête supplémentaire, disposée en avant de chaque paquet et dans lequel sont insérées au moins une information concernant les canaux logiques utiles de raccordement d'abonnés et une information déterminant le type du paquet, et
- et agencé de telle sorte que des paquets ainsi formés sont transmis, par l'intermédiaire d'une ligne d'abonné et au moyen d'une technique de transmission, au dispositif de commutation par paquets (PVE) associé, qui est commandé par programme et dans lequel les informations indiquées dans la zone de tête et, dans le cas de paquets d'établissement de liaisons, les informations d'adresses transmises dans la zone d'informations sont séparées et sont évaluées par une unité de commande centrale (ZST), à l'aide de laquelle, sur la base des informations respectivement présentes, est établie au moins une liaison logique ou virtuelle reliant le terminal d'abonné d'origine au terminal d'abonné de destination (TLE) et par l'intermédiaire de laquelle les paquets associés à la liaison virtuelle respective sont, ensuite, commutés par l'intermédiaire d'un dispositif de couplage (KN), disposé dans le dispositif de commutation par paquets (PVE), et éventuellement par l'intermédiaire d'autres dispositifs de commutation par paquets (PVE),
- les paquets étant envoyés au moins par l'intermédiaire d'un canal logique associé du raccordement d'abonné concerné, au terminal d'abonné de destination (TLE) et y étant dépaquetés,
- et agencé de telle sorte qu'en fonction de l'apparition d'une information de demande, pour la formation d'au moins un réseau annulaire virtuel dans l'unité de commande centrale (ZST), respectivement au moins un canal logique d'arrivée (ALK) des raccordements des terminaux d'abonnés, déterminés par les informations de demande, est couplé, par ce dispositif de commande et à l'aide du dispositif de couplage (KN) et éventuellement d'autres dispositifs de commutation par paquets (PVE), à au moins un canal logique de départ (GLK), déterminé par les informations de demande, d'un raccordement de terminal d'abonné de telle sorte que les terminaux d'abonnés (TLE) indiqués dans les informations de demande, forment respectivement au moins un réseau annulaire virtuel,
- auquel cas dans les terminaux d'abonnés (TLE) concernés, en fonction de l'apparition des informations de demande, respectivement les canaux logiques concernés du raccordement de terminal d'abonné sont séparés ou réunis à l'aide de dispositifs de multiplexage et par démultiplexage par paquets (MUX, DEMUX), et les canaux logiques de départ et d'arrivée (ALK, GLK), prévus pour la formation d'au moins un réseau annulaire virtuel, sont couplés, respectivement par l'intermédiaire d'une unité de commande (RZS) d'accès au réseau annulaire, commandée par une unité de commande périphérique (STE) du terminal d'abonné (TLE), dans le sens de la formation d'un réseau annulaire, et
- et agencé de telle sorte que la mise en service du réseau annulaire virtuel respectif et l'accès au réseau annulaire virtuel respectif ainsi que la communication entre les terminaux d'abonnés (TLE) constituant respectivement un réseau annulaire virtuel, s'effectuent à l'aide de procédures d'accès au réseau annulaire, qui sont mises en oeuvre respectivement dans l'unité (RZS) de commande d'accès au réseau annulaire et qui sont indépendantes des procédures du dispositif de commutation par paquets (PVE).

2. Système de communication suivant la revendication 1, caractérisé par le fait que le système de communication est agencé de telle sorte qu'un réseau annulaire virtuel est formé pour des terminaux d'abonnés (TLE), qui sont reliés à plusieurs dispositifs de commutation par paquets (PVE), les informations de demande étant transmises, dans le cadre des procédures existantes d'établissement de liaisons, aux autres dispositifs de commutation par paquets (PVE).

3. Système de communication suivant l'une des revendications précédentes, caractérisé par le fait que le système de communication est agencé de telle sorte que plusieurs réseaux annulaires virtuels, qui passent par au moins un dispositif de commutation par paquets (PVE), sont formés en fonction de la présence respective d'une information de demande.

4. Système de communication suivant l'une des revendications précédentes, caractérisé par le fait que le système de communication est agencé de telle sorte qu'un terminal d'abonné (TLE) peut être couplé, respectivement par différents canaux logiques du raccordement d'abonné, à plusieurs réseaux annulaires virtuels, et que, pour chaque réseau annulaire virtuel, il est prévu une unité (RZS) de commande d'accès au réseau annulaire, qui comporte une procédure d'accès au réseau annulaire et qui est commandée par une unité de commande périphérique (STE) du terminal d'abonné (TLE).

5. Système de communication suivant l'une des revendications précédentes, caractérisé par le fait que le système de communication est agencé de telle sorte que l'adjonction de terminaux d'abonnés à des réseaux annulaires virtuels, ou leur suppression, est réalisée, en fonction de la présence d'une information de demande contenant des informations de modification, par couplage correspondant des canaux logiques concernés, dans le dispositif respectif de commutation par paquets (PVE), et que l'adjonction ou l'élimination logique du terminal d'abonné (TLE) s'effectue automatiquement pendant la mise en service du réseau annulaire virtuel modifié, au moyen de la procédure d'accès au réseau annulaire.

6. Système de communication suivant l'une des revendications précédentes, caractérisé par le fait que le système de communication est agencé de telle sorte qu'après une identification d'interruptions ou de perturbations des réseaux annulaires virtuels au moyen des procédures respectives d'accès au réseau annulaire, une information de demande contenant une information de modification est formée par ces procédures et est transmise à l'unité de commande centrale (ZST) du dispositif concerné de commutation par paquets (PVE), qui est structuré de telle sorte qu'avec son dispositif de couplage (KN), le réseau annulaire virtuel respectif est reconfiguré de telle sorte que la partie interrompue ou perturbée du réseau annulaire virtuel est éliminée et que les parties intactes restantes forment un réseau annulaire virtuel.

7. Système de communication suivant l'une des revendications précédentes, caractérisé par le fait que le système de communication est agencé de telle sorte que l'information de demande est formée par un dispositif d'entrée (EE) du dispositif de commutation par paquets (PVE) et est transmise à l'unité de commande centrale (ZST) et aux terminaux d'abonnés concernés (TLE).

8. Système de communication suivant l'une des revendications précédentes, caractérisé par le fait que le système de communication est agencé de telle sorte que l'information de demande est formée dans les terminaux d'abonnés (TLE) et est transmise à l'unité de commande centrale (ZST) du dispositif associé de commutation par paquets (PVE) et, par ce dernier, aux terminaux d'abonnés concernés (TLE).
